# EUROPÄISCHE PATENTSCHRIFT

(11) **EP 3 700 787 B1**
(45) Veröffentlichungstag und Bekanntmachung des Hinweises auf die Patenterteilung: **02.07.2025**
(21) Anmeldenummer: 18796369.9
(22) Anmeldetag: 15.10.2018
(51) Int. Cl.: B60T 11/32, B60T 17/04, B60T 17/06, B60T 17/22

(54) **FLUIDBEHÄLTER MIT EINEM SPERRVENTIL**
FLUID RESERVOIR WITH A STOP VALVE
RÉSERVOIR DE FLUIDE MUNI D'UNE VALVE DE COUPURE

(30) Priorität: 25.10.2017 DE 102017219030
(43) Veröffentlichungstag der Anmeldung: 02.09.2020
(73) Patentinhaber: Continental Automotive Technologies GmbH, 30175 Hannover (DE)
(72) Erfinder: KREBS, Werner, 65582 Hambach (DE); KRÄMER, Horst, 65462 Ginsheim-Gustavsburg (DE); RÜFFER, Manfred, 65843 Sulzbach (DE); SCHLICHT, Stephan, 64569 Nauheim (DE); LOKE, Jörg, 65611 Brechen (DE); ROZSYPAL, Zdenek, 506 01 Jicin (CZ); MASEK, Jaroslav, 507 21 Jicin (CZ)
(74) Vertreter: Continental Corporation
(86) Internationale Anmeldenummer: PCT/EP2018/078042
(87) Internationale Veröffentlichungsnummer: WO 2019/081247

(56) Entgegenhaltungen:
- EP-A1- 0 340 186
- EP-A1- 1 514 758
- EP-A1- 3 124 430
- EP-A1- 3 418 141
- DE-A1- 3 912 110
- FR-A1- 2 353 008
- US-A1- 2007 090 206

## Beschreibung

Die Erfindung bezieht sich auf ein Aggregat zur Erzeugung von Bremsdruck in einer hydraulischen Kraftfahrzeugbremsanlage mit einem Fluidbehälter, nach dem Oberbegriff der unabhängigen Ansprüche.

Derartige gattungsgemäße Fluidbehälter weisen einen oder mehrere, meistens zwei, den einzelnen Bremskreisen zugeordnete mit je einem internen hydraulischen Verbindungskanal ausgestattete Anschlussstutzen, welche in korrespondierende Aufnahmesitze unmittelbar am zugeordneten Bremsaggregat oder einem gesonderten Schnittstellenadapter eingesetzt werden. Insbesondere aus Sicherheitsgründen ergibt sich eine naheliegende Forderung, ein ungewolltes Entweichen der brennbaren Bremsflüssigkeit aus dem Fluidbehälter gerade dann zu verhindern, wenn die Anschlussstutzen sich nicht in den dafür vorgesehenen Aufnahmesitzen befinden. Dies kann beispielsweise bei Demontage des gefüllten Fluidbehälters im Servicefall oder einem Lösen des Fluidbehälters infolge eines ungewollten Ereignisses wie ein Crash der Fall sein.

Hierzu ist es grundsätzlich bekannt, in den Verbindungskanälen der Anschlussstutzen Sperrventile einzusetzen.

Aus DE 10 2014 207 839 A1 ist beispielsweise ein Sperrventil bekannt, welches unmittelbar in dem Verbindungskanal aufgebaut ist. Aus DE 10 2014 213 709 A1 ist ein weiteres gattungsgemäßes Sperrventil bekannt, welches als ein gesondertes Ventilmodul zum Einsetzten in den Verbindungskanal gestaltet ist.

Ebenso wie ein aus DE 3912110 A1 bekanntes Betätigungselement zum Betätigen eines Ventil- Schließkörpers weisen derartige Sperrventile einen schaftartig verlängerten Ventilschließkörper auf, der beim geschlossenen Ventilzustand aus dem Anschlussstutzen, somit aus dem Fluidbehälter nach außen herausragt. Beim Einsetzen in den Aufnahmesitz stützt sich der Ventilschließkörper am Boden des Aufnahmesitzes ab, wird dadurch zwangsweise in den Fluidbehälter hineingeschoben und öffnet damit das Ventil.

Als nachteilig wird dabei angesehen, dass ein derartiges Ventil im Extremfall auch ungewollt betätigt werden könnte, beispielsweise durch ein Verbiegen, Abbrechen oder eine andersartige Beschädigung des Ventilschließkörpers oder dessen ungewollte Abstützung an irgendeinem anderen Gegenstand.

Aus der nachveröffentlichten EP 3418141 A1 ist es bekannt, im Boden des Aufnahmesitzes einen integrierten Vorsprung abzuformen, welcher beim Einsetzen des Behälters in den Verbindungskanal des Anschlussstutzens eingreift, wodurch das Ventilschließkörper verkürzt werden kann. Eine solche Lösung erfordert jedoch eine Änderung oder Neuherstellung von Gusswerkzeugen und wird daher als kostspielig angesehen, zudem ist sie nicht für eine Modifikation von bestehenden Bremsaggregaten geeignet.

Die Erfindung beruht daher auf der Aufgabe, eine verbesserte Lösung gegen ungewolltes Entleeren des Fluidbehälters anzubieten, welche kostengünstig und möglichst als eine nachträgliche Modifikation realisiert werden könnte.

Die Aufgabe wird erfindungsgemäß durch ein hydraulisches Aggregat mit einem Fluidbehälter mit den Merkmalskombinationen nach den unabhängigen Ansprüchen 1 oder 2 gelöst. Unteransprüche geben weitere erfindungsgemäße Ausführungen und Weiterbildungen an.

Das Aggregat kann beispielsweise und nicht einschränkend ein Hauptbremszylinder oder ein hydraulischer Bremskraftverstärker, eine hydraulische Bremsdruckmodulationsvorrichtung oder beliebige Kombination der Vorgenannten sein.

Zur Lösung des Problems sieht die Erfindung vor, das Sperrventil als ein separates Bauteil vorzusehen, welches in dem Aufnahmesitz vor der Montage des Fluidbehälters gesondert angeordnet wird. Diese Lösung bietet insbesondere den Vorteil, dass bestehende Produkte durch eine einfache Nacharbeit oder leichte Modifikation an den verbesserten Fluidbehälter angepasst werden können.

Gemäß einer ersten, besonders kostengünstigen und leicht modifizierbaren Ausführung wird im Boden des Aufnahmesitzes eine insbesondere konische Mulde vorgesehen, in die das als eine Kugel ausgebildete Stützmittel eingelegt ist.

Gemäß einer zweiten erfindungsgemäßen, ebenso einfach nachträglich modifizierbaren Ausführung werden in dem Boden des Aufnahmesitzes eine gesonderte Befestigungsbohrung und am Stützmittel ein Befestigungsstift ausgebildet, welcher zur Fixierung kraftschlüssig in eine Befestigungsbohrung eingreift.

Eine Weiterbildung der zweiten Ausführungsform sieht vor, dass das Stützmittel ventilschließkörperseitig verrundet ausgebildet ist und vorzugsweise eine im Wesentlichen punktförmige Kontaktstelle mit dem Ventilschließkörper aufweist. Damit kann die Reibung zum Ventilschließkörper und folglich dessen Fehlbetätigung beispielsweise durch Verkanten verringert werden. Gleichzeitig wird der Strömungswiderstand für die im Betrieb durchfließende Bremsflüssigkeit ebenso reduziert und optimiert.

Weitere Merkmale, Vorteile und Anwendungsmöglichkeiten der Erfindung gehen aus der nachfolgenden Beschreibung mehrerer erfindungsgemäßer Ausführungen hervor. Hierbei zeigen in Schnittdarstellung:
Fig.1 Teilansicht eines bekannten gattungsgemäßen Fluidbehälters mit einer bekannten nicht erfindungsgemäßen Ausführung eines Sperrventils.
Fig.2 Teilansicht einer Ausführungsform des Fluidbehälters mit dem Sperrventil und einem in dem Aufnahmesitz integrierten Stützmittel.
Fig.3 Teilansicht einer ersten erfindungsgemäßen Ausführungsform des Fluidbehälters mit dem Sperrventil und einem in dem Aufnahmesitz einlegbaren Stützmittel.
Fig.4 Teilansicht einer zweiten erfindungsgemäßen Ausführungsform des Fluidbehälters mit dem Sperrventil und einem in dem Aufnahmesitz befestigt eingesetzten Stützmittel.

### Fig.1

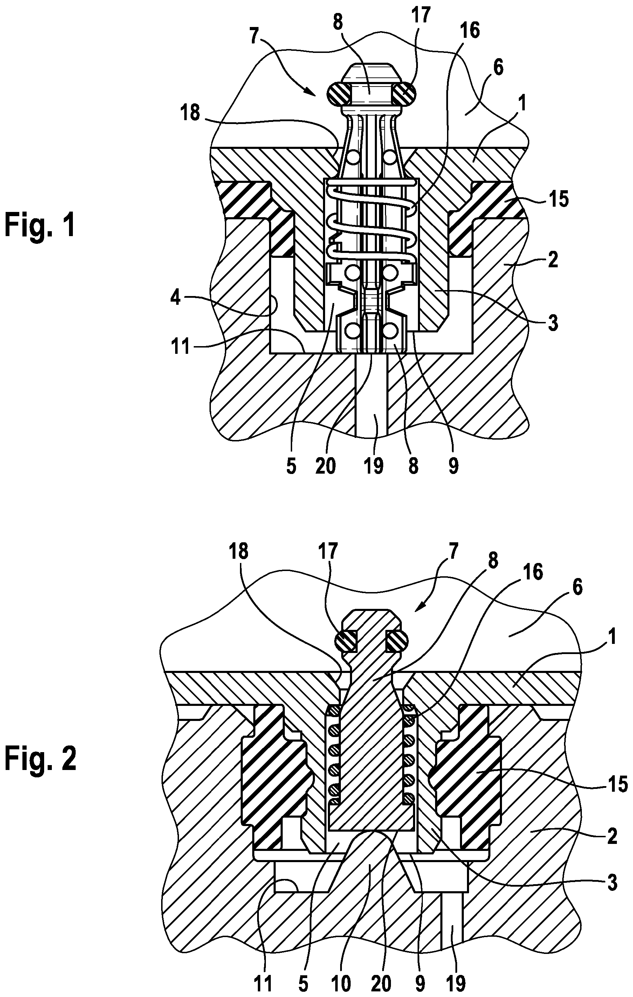

Das Funktionsprinzip wird in Fig.1 anhand eines als ein Bremsflüssigkeitsbehälter ausgebildeten Fluidbehälters 1 mit einem bekannten Sperrventil im eingebauten Zustand verdeutlicht.

Der Fluidbehälter 1 weist einen an seinem Behälterboden angeformten Anschlussstutzen 3, welcher in einen Aufnahmesitz 4 des Aggregats 2, in diesem Fall eines Hauptbremszylinders eingesetzt und mittels einer Formdichtung 15 gegen die Innenmantelfläche des Aufnahmesitzes 4 abgedichtet ist.

Der Anschlussstutzen 3 ist im Wesentlichen rohrförmig mit einem inneren Verbindungskanal 5 ausgebildet. In dem Verbindungskanal 5 ist ein Sperrventil 7 angeordnet. Über den Verbindungskanal 5 und einen in dem Aufnahmesitz 4 vorgesehenen Durchlass 19 gelangt die Bremsflüssigkeit aus dem Behälterinnenraum in das Aggregat 2.

Das Sperrventil 7 weist einen schaftartig verlängerten, in dem Verbindungskanal 5 axial verschiebbaren Ventilschließkörper 8 auf. An seinem oberen, zum Behälterinnenraum 6 gerichteten Ende ist am Ventilschließkörper 8 ein Dichtelement 17 angeordnet, welches in einem hier nicht gezeigten geschlossenen Zustand des Sperrventils 7 von der Ventilfeder 16 gegen einen Ventilsitz 18 gepresst wird und so den Verbindungskanal 5 sperrt.

Das untere, zum Aufnahmesitz 4 gerichtete Ende 20 des Ventilschließkörpers 8 ragt über den äußeren axialen Rand 9 des Anschlussstutzens 3 nach Außen hinaus und stützt sich gegen den Boden 11 des Aufnahmesitzes 4. Dadurch wird der Ventilschließkörper 8 in den Anschlussstutzen 3 in Richtung Behälterinnenraum 6 hineingeschoben und das Dichtelement 17 vom Ventilsitz 18 gehoben.

### Fig.2

Fig.2 zeigt eine weitere Ausführungsform des Fluidbehälters 1. Im Unterschied zu der vorstehend beschriebenen Ausführung ist der Ventilschließkörper 8 derart kurz ausgebildet, dass sein unteres, zum Aufnahmesitz 4 gerichtetes Ende 20 sich auch im geschlossenen Zustand des Sperrventils 7 vollständig innerhalb des Verbindungskanals 5 befindet und nicht über Kontur nach Außen hinausragt, welche durch den äußeren Rand 9 des Anschlussstutzens 3 gebildet ist.

Um den Ventilschließkörper 8 dennoch in Richtung Behälterinnenraum 6 zu versetzen und den Verbindungskanal 5 hydraulisch freizugeben, ist in dem Aufnahmesitz 4 ein gesondertes Stützmittel 10 vorgesehen.

Bei der gezeigten Ausführung ist das Stützmittel 10 als ein am Boden 11 des Aufnahmesitzes 4 integrativ angeformter, axial in Richtung Anschlussstutzen 3 vorgestreckter Vorsprung ausgebildet. Zur Verbesserung des Strömungsverhaltens der Bremsflüssigkeit und gleichzeitigen Verringerung der Reibung mit dem Ventilschließkörper ist der Vorsprung im Wesentlichen konisch mit einem verrundeten Ende gestaltet, so dass zu dem Ventilschließkörper 8 eine im Wesentlichen punktförmige Kontaktstelle besteht.

Im eingebauten Zustand greift das Stützmittel 10 unmittelbar in den Verbindungskanal 5 des Anschlussstutzens 3 hinein und versetzt so den erfindungsgemäß verkürzten Ventilschließkörper 8 in Richtung Behälterinnenraum 6 und das Dichtelement 17 vom Ventilsitz 18.

### Fig.3

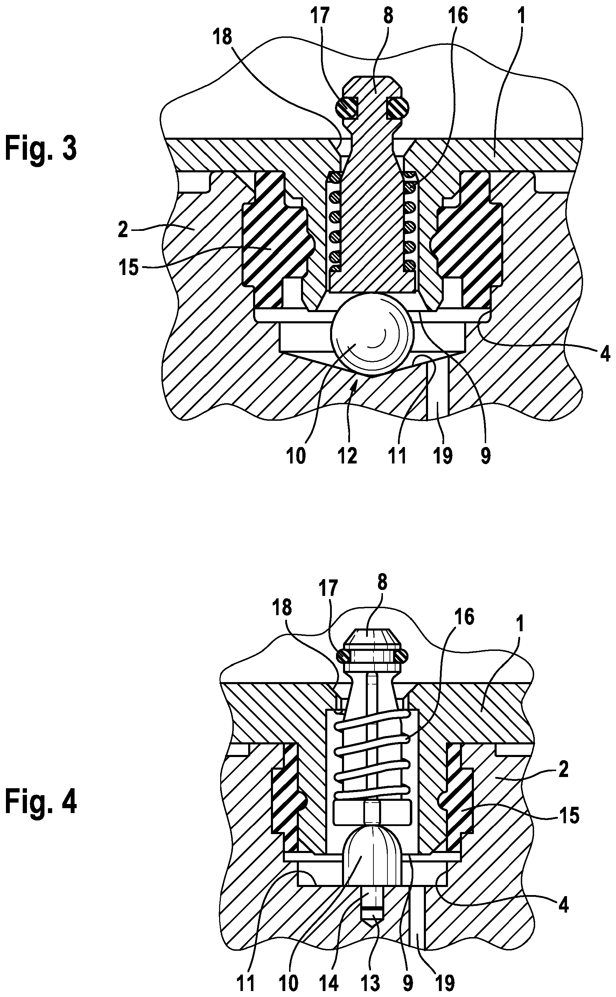

Fig.3 zeigt eine erste erfindungsgemäße Ausführungsform des Fluidbehälters 1. Im Unterschied zu der Ausführung nach Fig.2 ist das Stützmittel 10 als eine Kugel vorgesehen, die in den Aufnahmesitz 4 hineingelegt ist. Um eine korrekte Positionierung der Kugel und deren Kontakt mit dem Ventilschließkörper 8 sicherzustellen ist in dem Boden 10 des Aufnahmesitzes eine Mulde 12 vorgesehen. Im gezeigten Beispiel ist der gesamte Boden 11 konisch muldenförmig gestaltet, wodurch eine darein eingelegte Kugel sich allein durch Schwerkrafteinwirkung zwangsweise selbstzentriert.

### Fig.4

Fig.4 zeigt eine zweite erfindungsgemäße Ausführungsform des Fluidbehälters 1. Im Unterschied zu der Ausführung nach Fig.2 ist das Stützmittel 10 als ein gesondertes Einsatzteil vorgesehen, welches jedoch im Unterschied zu der Ausführung nach Fig.3 im Aufnahmesitz 4 befestigt ist.

Hierfür ist im Boden 11 des Aufnahmesitzes 4 eine Befestigungsbohrung 13 ausgebildet und am Stützmittel 10 ein korrespondierender Befestigungsstift 14, welcher kraftschlüssig in die Befestigungsbohrung 13 eingesetzt ist. Ein Umkehrprinzip sowie eine formschlüssige Verbindung beispielsweise mittels Gewinde oder eine stoffschlüssige Verbindung mittels Verklebung sind innerhalb der Erfindung jederzeit möglich und zulässig.

Zur Verbesserung des Strömungsverhaltens der Bremsflüssigkeit und gleichzeitigen Verringerung der Reibung mit dem Ventilschließkörper ist das Einsatzteil ventilschließkörperseitig kugelförmig verrundet ausgebildet.

### Bezugszeichenliste

- 1: Fluidbehälter
- 2: Aggregat
- 3: Anschlussstutzen
- 4: Aufnahmesitz
- 5: Verbindungskanal
- 6: Behälterinnenraum
- 7: Sperrventil
- 8: Ventilschließkörper
- 9: Rand
- 10: Stützmittel
- 11: Boden
- 12: Mulde
- 13: Befestigungsbohrung
- 14: Befestigungsstift
- 15: Formdichtung
- 16: Ventilfeder
- 17: Dichtelement
- 18: Ventilsitz
- 19: Durchlass
- 20: Ende

## Patentansprüche

1. Aggregat zur Erzeugung von Bremsdruck in einer hydraulischen Kraftfahrzeugbremsanlage (2) mit einem Fluidbehälter (1) zur Versorgung desselben mit einer Bremsflüssigkeit, umfassend wenigstens einen Anschlussstutzen (3) zum Einsetzen in einen Aufnahmesitz (4) des Aggregats (2), in dem Anschlussstutzen (3) einen Verbindungskanal (5) zur hydraulischen Verbindung eines Behälterinnenraums (6) mit dem Aggregat (2) und einen in dem Verbindungskanal (5) angeordneten Sperrventil (7) zum Absperren des Verbindungskanals (5), wobei das Sperrventil (7) einen verschiebbaren Ventilschließkörper (8)aufweist, welcher das Sperrventil (7) beim Einsetzten des Anschlussstutzens (3) in den Aufnahmesitz (4) durch Krafteinwirkung zwangsweise in einen geöffneten Zustand und beim Entfernen des Anschlussstutzens (3) aus dem Aufnahmesitz (4) in einen geschlossenen Zustand versetzt, wobei der Ventilschließkörper (8) beim geschlossenen Zustand des Sperrventils (7) vollständig innerhalb einer durch einen äußeren Rand (9) des Anschlussstutzens (3) gebildeten Kontur in dem Fluidbehälter (1) aufgenommen ist, wobei das Aggregat (2) in dem Aufnahmesitz (4) ein Stützmittel (10) aufweist, welches im eingesetzten Zustand zumindest bereichsweise in den Verbindungskanal (5) eingreift und wobei der Ventilschließkörper (8) dazu eingerichtet ist, im eingesetzten Zustand durch das Stützmittel (10) in dem Aufnahmesitz (4) des Aggregats (2) in den Verbindungskanal (5) verschoben zu werden, wobei das Stützmittel (10) als ein separates Einsatzteil vorgesehen ist, **dadurch gekennzeichnet, dass** der Aufnahmesitz (4) einen Boden (11) mit einer Mulde (12) aufweist und das Stützmittel (10) als eine in die Mulde (12) eingelegte Kugel ausgebildet ist.

2. Aggregat zur Erzeugung von Bremsdruck in einer hydraulischen Kraftfahrzeugbremsanlage (2) mit einem Fluidbehälter (1) zur Versorgung desselben mit einer Bremsflüssigkeit, umfassend wenigstens einen Anschlussstutzen (3) zum Einsetzen in einen Aufnahmesitz (4) des Aggregats (2), in dem Anschlussstutzen (3) einen Verbindungskanal (5) zur hydraulischen Verbindung eines Behälterinnenraums (6) mit dem Aggregat (2) und einen in dem Verbindungskanal (5) angeordneten Sperrventil (7) zum Absperren des Verbindungskanals (5), wobei das Sperrventil (7) einen verschiebbaren Ventilschließkörper (8) aufweist, welcher das Sperrventil (7) beim Einsetzten des Anschlussstutzens (3) in den Aufnahmesitz (4) durch Krafteinwirkung zwangsweise in einen geöffneten Zustand und beim Entfernen des Anschlussstutzens (3) aus den Aufnahmesitz (4) in einen geschlossenen Zustand versetzt, wobei der Ventilschließkörper (8) beim geschlossenen Zustand des Sperrventils (7) vollständig innerhalb einer durch einen äußeren Rand (9) des Anschlussstutzens (3) gebildeten Kontur in dem Fluidbehälter (1) aufgenommen ist, wobei das Aggregat(2) in dem Aufnahmesitz (4) ein Stützmittel (10) aufweist, welches im eingesetzten Zustand zumindest bereichsweise in den Verbindungskanal (5) eingreift und wobei der Ventilschließkörper (8) dazu eingerichtet ist, im eingesetzten Zustand durch das Stützmittel (10) in dem Aufnahmesitz (4) des Aggregats (2) in den Verbindungskanal (5) verschoben zu werden, wobei das Stützmittel (10) als ein separates Einsatzteil vorgesehen ist, welches im Aufnahmesitz (4) befestigt ist, **dadurch gekennzeichnet, dass** der Aufnahmesitz (4) einen Boden (11) mit einer darin ausgebildeten Befestigungsbohrung (13) aufweist und das Stützmittel (10) einen Befestigungsstift (14) zum Einsetzen in die Befestigungsbohrung (13) umfasst.

3. Aggregat (2) nach Anspruch 2, **dadurch gekennzeichnet, dass** das Stützmittel (10) eine im Wesentlichen punktförmige Kontaktstelle mit dem Ventilschließkörper (8) aufweist.

4. Aggregat (2) nach Anspruch 3, **dadurch gekennzeichnet, dass** das Stützmittel (10) zum Ventilschließkörper (8) hin verrundet ausgebildet ist.

## Claims

1. Assembly for generating brake pressure in a hydraulic motor-vehicle brake system (2) with a fluid container (1) for supply thereof with a brake fluid, comprising at least one connector piece (3) for insertion into a receiving seat (4) of the assembly (2), in the connector piece (3) a connecting channel (5) for hydraulically connecting a container interior space (6) to the assembly (2), and a shut-off valve (7) which is arranged in the connecting channel (5) and serves for blocking the connecting channel (5), wherein the shut-off valve (7) has a displaceable valve closure body (8) which, upon insertion of the connector piece (3) into the receiving seat (4), automatically transfers the shut-off valve (7) into an open state by action of force and which, upon removal of the connector piece (3) from the receiving seat (4), transfers said shut-off valve into a closed state, wherein, in the closed state of the shut-off valve (7), the valve closure body (8) is received in the fluid container (1) completely within a contour formed by an outer edge (9) of the connector piece (3), wherein the assembly (2) has in the receiving seat (4) a supporting means (10) which, in the inserted state, at least regionally engages into the connecting channel (5), and wherein the valve closure body (8) is configured to be moved into the connecting channel (5) in the inserted state by the supporting means (10) in the receiving seat (4) of the assembly (2), wherein the supporting means (10) is provided as a separate insert part, **characterized in that** the receiving seat (4) has a bottom (11) with a depression (12) and the supporting means (10) is in the form of a ball placed into the depression (12).

2. Assembly for generating brake pressure in a hydraulic motor-vehicle brake system (2) with a fluid container (1) for supply thereof with a brake fluid, comprising at least one connector piece (3) for insertion into a receiving seat (4) of the assembly (2), in the connector piece (3) a connecting channel (5) for hydraulically connecting a container interior space (6) to the assembly (2), and a shut-off valve (7) which is arranged in the connecting channel (5) and serves for blocking the connecting channel (5), wherein the shut-off valve (7) has a displaceable valve closure body (8) which, upon insertion of the connector piece (3) into the receiving seat (4), automatically transfers the shut-off valve (7) into an open state by action of force and which, upon removal of the connector piece (3) from the receiving seat (4), transfers said shut-off valve into a closed state, wherein, in the closed state of the shut-off valve (7), the valve closure body (8) is received in the fluid container (1) completely within a contour formed by an outer edge (9) of the connector piece (3), wherein the assembly (2) has in the receiving seat (4) a supporting means (10) which, in the inserted state, at least regionally engages into the connecting channel (5), and wherein the valve closure body (8) is configured to be displaced into the connecting channel (5) in the inserted state by the supporting means (10) in the receiving seat (4) of the assembly (2), wherein the supporting means (10) is provided as a separate insert part which is fastened in the receiving seat (4), **characterized in that** the receiving seat (4) has a bottom (11) with a fastening bore (13) formed therein and the supporting means (10) comprises a fastening pin (14) for insertion into the fastening bore (13).

3. Assembly (2) according to Claim 2, **characterized in that** the supporting means (10) has a substantially punctiform contact location with respect to the valve closure body (8).

4. Assembly (2) according to Claim 3, **characterized in that** the supporting means (10) is formed so as to be rounded towards the valve closure body (8).

## Revendications

1. Groupe de production d'une pression de freinage dans une installation de freinage (2) hydraulique de véhicule à moteur avec un récipient de fluide (1) pour alimenter celui-ci avec un liquide de frein, comprenant au moins une tubulure de raccordement (3) destinée à être insérée dans un siège de logement (4) du groupe (2), dans la tubulure de raccordement (3), un conduit de liaison (5) destiné à relier hydrauliquement un espace intérieur (6) de récipient au groupe (2) et une valve d'arrêt (7) disposée dans le conduit de liaison (5), destinée à fermer le conduit de liaison (5), la valve d'arrêt (7) comportant un obturateur (8) de valve pouvant être coulissé, lequel amène la valve d'arrêt (7) nécessairement du fait de l'action d'une force dans un état ouvert lors de l'insertion de la tubulure de raccordement (3) dans le siège de logement (4) et dans un état fermé lors du retrait de la tubulure de raccordement (3) hors du siège de logement (4), l'obturateur (8) de valve étant logé entièrement dans le récipient de fluide (1) à l'intérieur d'un contour formé par un bord extérieur (9) de la tubulure de raccordement (3) lorsque la valve d'arrêt (7) est dans l'état fermé, le groupe (2) comportant, dans le siège de logement (4), un moyen d'appui (10) qui vient en prise au moins par endroits avec le conduit de liaison (5) dans l'état inséré et l'obturateur (8) de valve étant mis au point pour être coulissé dans le conduit de liaison (5) dans l'état inséré par le moyen d'appui (10) dans le siège de logement (4) du groupe (2), le moyen d'appui (10) étant prévu en tant qu'une pièce d'insertion séparée, **caractérisé en ce que** le siège de logement (4) comporte un fond (11) avec une cavité (12) et le moyen d'appui (10) est réalisé comme une boule placée dans la cavité (12).

2. Groupe de production d'une pression de freinage dans une installation de freinage (2) hydraulique de véhicule à moteur avec un récipient de fluide (1) pour alimenter celui-ci avec un liquide de frein, comprenant au moins une tubulure de raccordement (3) destinée à être insérée dans un siège de logement (4) du groupe (2), dans la tubulure de raccordement (3), un conduit de liaison (5) destiné à relier hydrauliquement un espace intérieur (6) de récipient au groupe (2) et une valve d'arrêt (7) disposée dans le conduit de liaison (5), destinée à fermer le conduit de liaison (5), la valve d'arrêt (7) comportant un obturateur (8) de valve pouvant être coulissé, lequel amène la valve d'arrêt (7) nécessairement du fait de l'action d'une force dans un état ouvert lors de l'insertion de la tubulure de raccordement (3) dans le siège de logement (4) et dans un état fermé lors du retrait de la tubulure de raccordement (3) hors du siège de logement (4), l'obturateur (8) de valve étant logé entièrement dans le récipient de fluide (1) à l'intérieur d'un contour formé par un bord extérieur (9) de la tubulure de raccordement (3) lorsque la valve d'arrêt (7) est dans l'état fermé, le groupe (2) comportant, dans le siège de logement (4), un moyen d'appui (10) qui vient en prise au moins par endroits avec le conduit de liaison (5) dans l'état inséré et l'obturateur (8) de valve étant mis au point pour être coulissé dans le conduit de liaison (5) dans l'état inséré par le moyen d'appui (10) dans le siège de logement (4) du groupe (2), le moyen d'appui (10) étant prévu en tant qu'une pièce d'insertion séparée qui est fixée dans le siège de logement (4), **caractérisé en ce que** le siège de logement (4) comporte un fond (11) avec un alésage de fixation (13) réalisé à l'intérieur et le moyen d'appui (10) comprend une tige de fixation (14) destinée à être insérée dans l'alésage de fixation (13).

3. Groupe (2) selon la revendication 2, **caractérisé en ce que** le moyen d'appui (10) comporte un point de contact sensiblement en forme de point avec l'obturateur (8) de valve.

4. Groupe (2) selon la revendication 3, **caractérisé en ce que** le moyen d'appui (10) est réalisé de manière arrondie en direction de l'obturateur (8) de valve.
